# EUROPÄISCHE PATENTANMELDUNG

(11) **EP 1 122 843 A1**
(43) Veröffentlichungstag der Anmeldung: **08.08.2001**
(21) Anmeldenummer: 00127689.8
(22) Anmeldetag: 18.12.2000
(51) Int. Cl.: H02G 1/08, H02G 1/06, G02B 6/44

(54) **Verfahren zum Einziehen von Kabeln in Kabelkanäle oder -rohre**

(30) Priorität: 04.02.2000 DE 10004992
(71) Anmelder: SCC Special Communication Cables GmbH & Co. KG, 81379 München (DE)
(72) Erfinder: Mayr, Ernst, 82319 Starnberg (DE); Einsle, Günter, 81479 München (DE)
(74) Vertreter: Fischer, Volker, Dipl.-Ing.

(57) **Zusammenfassung**

Es wird ein Verfahren zum Einziehen von an sich nicht zugfesten Kabeln, insbesondere von LWL-Kabeln, in Kabelkanäle oder Kabelrohre bereitgestellt, wobei das Kabel vor dem Einziehen mit einer zugfähigen Garnbespannung versehen wird. Als Garnbespannung kann ein Netzschlauch oder eine Umspinnung auf dem Kabel aufgebracht werden. Eine Anwendung des Verfahrens ist die Verbindung eines an einem Endmasten ankommenden Kabels mit einer Schaltstelle (Amt).

## Beschreibung

Die Erfindung betrifft ein Verfahren zum Einziehen von an sich nicht zugfesten Kabeln, insbesondere von LWL-Kabeln, in Kabelkanäle oder Kabelrohre. Die Erfindung betrifft ferner die Anwendung dieses Verfahrens zum Verbinden eines Kabels an einem Endmasten über Freileitung mit einem Amt.

Lichtwellenleiterkabel und auch elektrische Kabel werden je nach den Beanspruchungsbedingungen, denen die Kabel im Feld ausgesetzt sind, entweder als bewehrte und/oder zugfeste Kabel oder als leicht aufgebaute Kabel mit geringer Zugfestigkeit ausgeführt, wobei letztere Kabel dann zum Einsatz kommen, wenn die Kabel im Einsatz mit einem anderen tragenden Kabel verbunden werden können.

Bewehrte und/oder zugfeste Kabel haben die erforderliche Zugfestigkeit, so dass sie in Kabelkanäle oder Rohre eingezogen werden können. Ein Anwendungsfall für derartige Kabel ist die Verbindung eines an einem Endmasten einer Freileitung ankommenden LWL-Kabels mit dem an dem Endmasten zugeordneten Amt. Dabei wird das Kabel in der Regel durch Kabelkanäle oder Rohre gezogen, so dass es für diesen Montagezweck eine ausreichende Zugfestigkeit haben muss.

Ein Beispiel für an sich nicht zugfähige LWL-Kabel ist das sogenannte LWL-Laschkabel, bei dem es sich in der Regel um etwa 5 mm dickes AD-LWL-Kabel handelt, das an einem Erdseil oder einem Phasenseil einer Freileitung angelascht werden kann, wobei ein Laschband sowohl um das Erdseil als auch um das LWL-Kabel gewickelt wird. Offensichtlich benötigt das LWL-Kabel für diesen Anwendungsfall keine besondere Zugfestigkeit.

Nun gibt es in der Praxis Fälle, bei den man für den weitaus überwiegenden Teil einer Strecke, die von dem Kabel überwunden werden muss, mit einem leicht gebauten unbewehrten Kabel auskommt, wobei jedoch auf kurzen Zwischen- oder Endstrecken ein Kabel benötigt wird, welches eine ausreichende Zugfestigkeit hat. In diesen Fällen wurde bisher das Kabel abgeschnitten und ein zugfestes Kabel wurde mit Hilfe einer Garnitur angesetzt. Nach Überbrückung der Strecke, die das zugfeste Kabel erfordert, wird dann wieder über eine Garnitur auf das an sich nicht zugfeste Kabel übergegangen, welches aufgrund seines leichteren Aufbaus preiswerter als das bewehrte und/oder zugfeste Kabel ist.

Ein Beispiel für eine derartige Situation ist die Verbindung eines AD-LWL-Kabels, welches an einem Endmast einer Freileitung ankommt, mit einem Amt. Bisher wird für diese Verbindung das Kabelende des AD-LWL-Kabels in eine Garnitur am Endmast geführt, und von dort aus führt ein bewehrtes und/oder zugfestes Kabel ins Amt, wobei die Länge dieser Verbindung in der Regel zwischen 10 bis 300 m beträgt. Für diese Verbindung zwischen Endmast und Amt müssen dann spezielle, teure Kurz-Kabellängen gefertigt werden, die deshalb teuer und aufwendig sind, weil immer nur kurze Stücke produziert werden können oder müssen. Andererseits erlaubt es die mangelnde Zugfestigkeit des AD-LWL-Kabels nicht, dass dieses Kabel direkt durch Kabelkanäle oder Rohre vom Endmast bis zum Amt durchgezogen wird.

Der Erfindung liegt demgegenüber die Aufgabe zugrunde, ein Verfahren zum Einziehen von an sich nicht zugfähigen Kabeln in Kabelkanäle oder Kabelrohre und eine Anwendung dieses Verfahrens auf die Verbindung zwischen Endmast und Amt bereitzustellen, die das Fertigen von speziellen, teuren Kurzlängen von bewehrten Kabeln für kurzstreckige Verbindungen der genannten Art überflüssig machen.

Die Lösung dieser Aufgabe ist in Anspruch 1 beziehungsweise Anspruch 9 angegeben.

Demnach ist ein Verfahren zum Einziehen von an sich nicht zugfesten Kabeln, insbesondere von LWL-Kabeln, in Kabelkanäle oder Kabelrohre, dadurch gekennzeichnet, dass das Kabel vor dem Einziehen mit einer zugfähigen Garnbespannung versehen wird. Das für höhere Einziehkräfte nicht geeignete Kabel wird durch Aufbringen der zugfähigen Garnbespannung ertüchtigt, so dass das Kabel von dem Endmast durch Kabelkanäle oder Kabelrohre gezogen werden kann, ohne spezielle Kabel für diesen Zweck verwenden zu müssen. Es hat sich gezeigt, dass eine einfache Garnbespannung für diesen speziellen Zweck ausreicht, nämlich das Kabel einmalig über eine kurze Strecke durch einen Kabelkanal oder ein Kabelrohr zu ziehen.

Eine vorteilhafte Ausgestaltung des erfindungsgemäßen Verfahrens ist dadurch gekennzeichnet, dass die Garnbespannung am Montageort angebracht wird, wobei es möglich wird, das ankommende Kabel ohne Unterbrechung und Zwischenschaltung einer Garnitur zu ertüchtigen und in die Kabelkanäle oder -rohre einzuführen.

Eine vorteilhafte Ausgestaltung des erfindungsgemäßen Verfahrens ist dadurch gekennzeichnet, dass als Garnbespannung ein Netzschlauch auf das Kabel aufgezogen wird. Diese Garnbespannung kann in vorteilhafter Weise durch eine einfache Vorrichtung ohne rotierende Teile durchgeführt werden, wobei der Netzschlauch-Vorrat in der Vorrichtung für die ins Auge gefassten Kurzlängen ausreichend ist.

Eine weitere vorteilhafte Ausgestaltung des erfindungsgemäßen Verfahrens ist dadurch gekennzeichnet, dass eine ringförmige Aufnahmeeinrichtung für einen Netzschlauch-Vorrat verwendet wird, wobei das Kabel durch die Aufnahmeeinrichtung gezogen und dabei der Netzschlauch von der Aufnahmeeinrichtung abgezogen und auf das Kabel aufgezogen wird. Auf diese Weise kann das Kabel einfach ertüchtigt werden, und es ist in vorteilhafter Weise möglich, immer den erforderlichen Vorrat an Netzschlauch für die zu fertigende Kabellänge bereitzuhalten.

Eine weitere vorteilhafte Ausgestaltung des erfindungsgemäßen Verfahrens ist dadurch gekennzeichnet, dass als Garnbespannung ein Garn um das Kabel gesponnen wird. Durch Anwendung der Spinntechnik ist es in vorteilhafter Weise nicht mehr nötig, den Materialvorrat für die Garnbespannung auf die zu ertüchtigende Kabellänge einzustellen, da die Umspinnung jederzeit beendet werden kann.

Eine weitere vorteilhafte Ausgestaltung des erfindungsgemäßen Verfahrens ist dadurch gekennzeichnet, dass ein an sich bekannter Garnspinner oder -twister zum Umspinnen des Kabels verwendet wird. Hierbei handelt es sich um eine bewährte Technik, die den hier ins Auge gefassten Zweck erfüllt.

Eine weitere vorteilhafte Ausgestaltung des erfindungsgemäßen Verfahrens ist dadurch gekennzeichnet, dass der Netzschlauch beziehungsweise die Umspinnung durch eine zugfeste Kabelverkappung am Ende des Kabels fixiert wird. Dadurch wird in vorteilhafter Weise erreicht, dass die Garnbespannung während des Einziehen des Kabels ihren Zweck erfüllt und nicht an dem Kabel abrutscht.

Eine weitere vorteilhafte Ausgestaltung des erfindungsgemäßen Verfahrens ist dadurch gekennzeichnet, dass als Garnbespannung Kevlar- oder Glasfasern verwendet wird, wobei es sich dabei in vorteilhafter Weise um Fasern handelt, die die gewünschte Zugfestigkeit ohne weiteres erbringen.

Die Lösung der Aufgabe umfasst auch die Anwendung des vorstehend charakterisierten Verfahrens zum Verbinden eines an einem Endmasten ankommenden Kabels mit einer Schaltstelle (Amt), wobei die Garnbespannung auf dieser Strecke angebracht wird. Diese Anwendung ist insofern besonders vorteilhaft, weil bei diesem Anwendungsfall bisher teure Kurzlängen von bewehrten und/oder zugfesten Kabeln verwendet werden mussten.

Eine weitere vorteilhafte Ausgestaltung des vorstehend genannten Verfahrens ist dadurch gekennzeichnet, dass das Kabel ohne Unterbrechung und Garnitur vom Endmasten heruntergeführt, ertüchtigt und eingezogen wird. Diese Lösung ist dann vorteilhaft, wenn die Strecke zwischen dem Endmast und dem Amt verhältnismäßig kurz bemessen ist, so dass das von dem Endmasten kommende Kabel im Ring gelegt, ertüchtigt und eingezogen werden kann.

Eine andere vorteilhafte Ausgestaltung der oben genannten Anwendung ist dadurch gekennzeichnet, dass das an dem Endmasten ankommende Kabel in eine Garnitur geführt und mit einem Kabel gleicher Bauart verbunden wird, welches auf einer Kabeltrommel bevorratet ist, wobei die Verbindung in der Garnitur nach dem Einziehen des Kabels in die Kabelkanäle oder Kabelrohre erfolgt. Diese Lösung ist dann vorteilhaft, wenn die Distanz zwischen dem Endmasten und dem Amt größer ist, weil dann praktisch beliebige Längen für die Verbindung zwischen Endmasten und Amt auf der Kabeltrommel zur Verfügung stehen. Das nachträgliche Verbinden des ertüchtigten Kabels mit der Garnitur am Endmast ist deshalb vorteilhaft, weil die Kurzlänge in diesem Fall nicht vorher abgewickelt werden muss, bevor sie in die Kabelkanäle oder -rohre eingezogen wird.

Schließlich ist eine vorteilhafte Ausgestaltung des erfindungsgemäßen Verfahrens dadurch gekennzeichnet, dass als Kabel ein so genanntes LWL-Laschkabel verwendet wird. Bei der Verlegung derartiger Kabel ist das erfindungsgemäße Verfahren in Bezug auf Handling und Kostenersparnis besonders vorteilhaft.

Ausführungsbeispiele der Erfindung werden nun anhand der beiliegenden Zeichnungen beschrieben. Es zeigen:
- Figur 1: eine erstes Ausführungsbeispiel einer Einrichtung zum Bespannen und damit Ertüchtigen von Kabel; und
- Figur 2: eine zweite Ausführungsform zum Bespannen und damit Ertüchtigen eines Kabels.

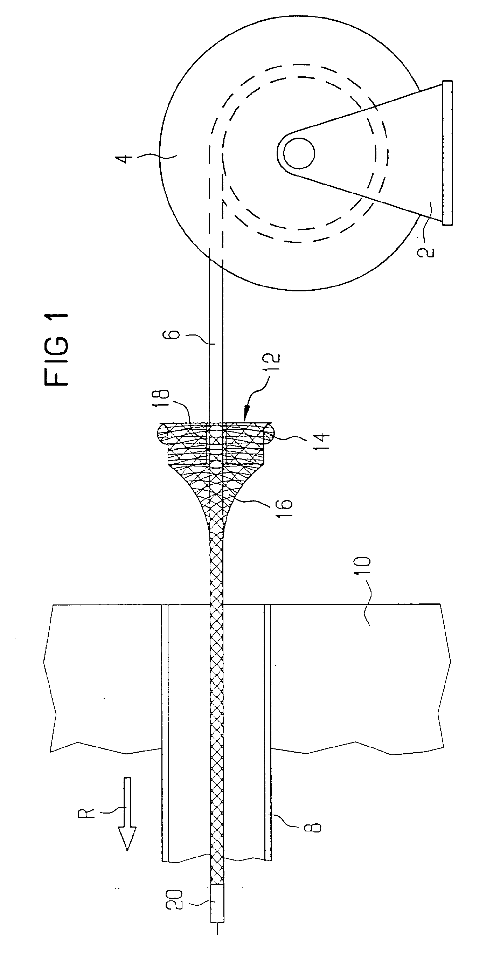

Die Anordnung nach Figur 1 umfasst eine auf einem Gestell 2 drehbar gelagerte Kabeltrommel 4, auf der ein LWL-Kabel 6 (AD-LWL-Kabel = All Dielectric Lichtwellenleiter-Kabel) aufgewickelt ist. Das LWL-Kabel 6 soll nun in den Kabelkanal 8, der in einem Kabelschacht 10 liegt, in Richtung des Pfeiles R eingezogen werden. Dazu ist zwischen der Kabeltrommel 4 und dem Kabelkanal 8 eine Aufnahmeeinrichtung 12 vorgesehen, auf der ein Vorrat 14 an Garnschlauch 16 bevorratet ist.

Die Aufnahmeeinrichtung 12 ist ringförmig ausgebildet und teilbar, so dass die Aufnahmeeinrichtung nach Abschluss der Ertüchtigung des Kabels auf einfache Weise abgenommen werden kann.

Zum Einziehen des Kabels 6 in den Kabelkanal 8 wird zunächst das Ende des Kabels 6 durch die mittige Öffnung 18 der Aufnahmevorrichtung 12 gesteckt. Dan wird das Ende des Kabels 6 und der Garnschlauch 16 über eine Kabelverkappung 20 miteinander verbunden, und das Kabel 6 mit dem Garnschlauch 16 werden in den Kanal 8 eingezogen.

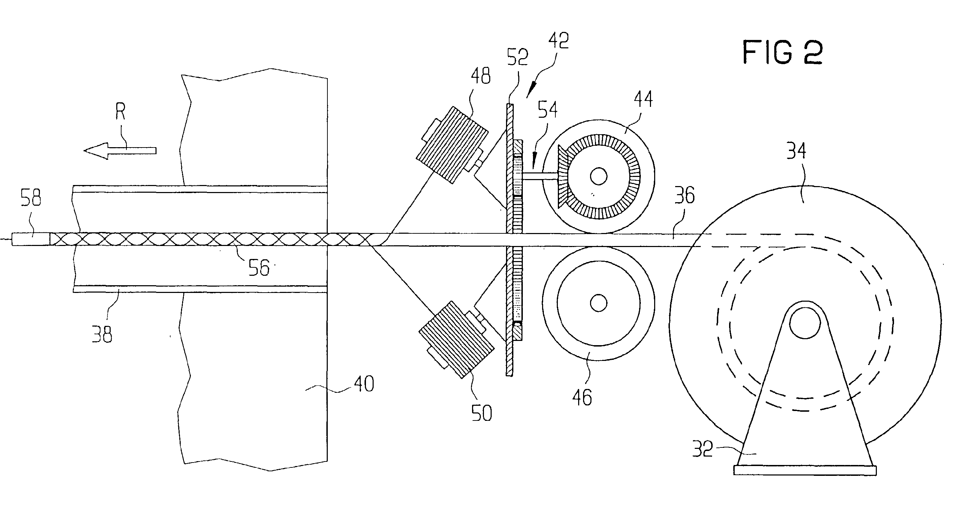

Die Anordnung nach Figur 2 umfasst eine auf einem Gestell 32 drehbar gelagerte Kabeltrommel 34, auf der ein LWL-Kabel 36 aufgewickelt ist. Das LWL-Kabel 36 soll nun in den Kabelkanal 38, in Richtung des Pfeiles R eingezogen werden. Dazu ist zwischen der Kabeltrommel 34 und dem Kabelkanal 38 ein Twister beziehungsweise Spinner 42 vorgesehen, auf dem ein Garnvorrat bevorratet ist.

Bei der Anordnung von Figur 2 wird das Kabel 36 durch den Spinner 42 geführt, der zwei Anpressrollen 44, 46 aufweist, die an dem Kabel 36 angreifen, um den Spinner 42 anzutreiben. Der Spinner 42 umfasst weiterhin zwei Garnspulen 48, 50, die auf einem Gestell 52 angeordnet sind und von den Anpressrollen 44, 46 über ein Getriebe 54 so angetrieben werden, dass sie sich in entgegengesetztem Drehsinn um das Kabel 36 drehen, um das Kabel 36 zu umspinnen. Vor dem Einziehen des Kabels 36 wird die Umspinnung 56 mit dem Kabelende durch eine Kabelverkappung 58 verbunden.

Bei den beiden Ausführungsformen wurde jeweils eine Kabeltrommel verwendet, das heißt es handelt sich um solche Anwendungsfälle, bei denen die zu ertüchtigende Kabellänge verhältnismäßig groß ist. Wenn die Kabellänge kleiner ist und als Ring vor dem Einziehen abgelegt werden kann, können die Kabeltrommeln entfallen, da dann das von dem Mast kommende Kabel ohne Unterbrechung in die Kabelkanäle eingezogen wird.

Bei der vorstehenden Beschreibung wurde insbesondere auf LWL-Laschkabel Bezug genommen. Die Erfindung ist aber nicht auf diesen Kabeltyp beschränkt, sondern auf zum Beispiel bei elektrischen Kabeln angewendet werden, bei denen die Verhältnisse der Festigkeit ähnlich liegen wie bei LWL-Kabeln.

## Patentansprüche

1. Verfahren zum Einziehen von an sich nicht zugfesten Kabeln, insbesondere von LWL-Kabeln, in Kabelkanäle oder Kabelrohre,
**dadurch gekennzeichnet, dass**
das Kabel vor dem Einziehen mit einer zugfähigen Garnbespannung versehen wird.

2. Verfahren nach Anspruch 1,
**dadurch gekennzeichnet, dass**
die Garnbespannung am Montageort angebracht wird.

3. Verfahren nach Anspruch 1 oder 2,
**dadurch gekennzeichnet, dass**
als Garnbespannung ein Netzschlauch auf das Kabel aufgezogen wird.

4. Verfahren nach Anspruch 3,
**dadurch gekennzeichnet, dass**
eine ringförmige Aufnahmeeinrichtung für einen Netzschlauch-Vorrat verwendet wird, wobei das Kabel durch die Aufnahmeeinrichtung gezogen und dabei den Netzschlauch von der Aufnahmeeinrichtung abgezogen und auf das Kabel aufgezogen wird.

5. Verfahren nach Anspruch 1 oder 2,
**dadurch gekennzeichnet, dass**
als Garnbespannung ein Garn um das Kabel gesponnen wird.

6. Verfahren nach Anspruch 5,
**dadurch gekennzeichnet, dass**
ein an sich bekannter Garnspinner oder -twister zum Umspinnen des Kabels verwendet wird.

7. Verfahren nach Anspruch 3 oder 5,
**dadurch gekennzeichnet, dass**
der Netzschlauch beziehungsweise die Umspinnung durch eine zugfeste Kabelverkappung am Ende des Kabels fixiert wird.

8. Verfahren nach einem der vorhergehenden Ansprüche,
**dadurch gekennzeichnet, dass**
als Garnbespannung Kevlar- oder Glasfasern werden wird.

9. Anwendung des Verfahrens nach einem der vorhergehenden Ansprüche zum Verbinden eines an einem Endmasten ankommenden Kabels mit einer Schaltstelle (Amt), wobei die Garnbespannung auf dieser Strecke angebracht wird.

10. Verfahren nach Anspruch 9,
**dadurch gekennzeichnet, dass**
das Kabel ohne Unterbrechung und Garnitur vom Endmasten heruntergeführt, ertüchtigt und eingezogen wird.

11. Verfahren nach Anspruch 9,
**dadurch gekennzeichnet, dass**
das an dem Endmasten ankommende Kabel in eine Garnitur geführt und mit einem Kabel gleicher Bauart verbunden wird, welches auf einer Kabeltrommel bevorratet ist, wobei die Verbindung in der Garnitur nach dem Einziehen des Kabels in die Kabelkanäle oder Kabelrohre erfolgt.

12. Verfahren nach einem der vorhergehenden Ansprüche,
**dadurch gekennzeichnet, dass**
Kabel ein so genanntes LWL-Laschkabel verwendet wird.
